# EUROPEAN PATENT SPECIFICATION

(11) **EP 4 199 632 B1**
(45) Date of publication and mention of the grant of the patent: **03.09.2025**
(21) Application number: 21855527.4
(22) Date of filing: 10.08.2021
(51) Int. Cl.: H04W 74/0833, H04L 1/08, H04W 74/00, H04W 74/0836, H04W 74/0838

(54) **RANDOM ACCESS SIGNAL TRANSMISSION METHOD, TERMINAL AND NETWORK SIDE DEVICE**
DIREKTZUGRIFFSSIGNALÜBERTRAGUNGSVERFAHREN, ENDGERÄT UND NETZWERKSEITIGE VORRICHTUNG
PROCÉDÉ DE TRANSMISSION DE SIGNAL D'ACCÈS ALÉATOIRE, TERMINAL ET DISPOSITIF CÔTÉ RÉSEAU

(30) Priority: 13.08.2020 CN 202010814515
(43) Date of publication of application: 21.06.2023
(73) Proprietor: Vivo Mobile Communication Co., Ltd., Dongguan, Guangdong 523863 (CN)
(72) Inventor: YANG, Kun, Dongguan, Guangdong 523863 (CN); WU, Kai, Dongguan, Guangdong 523863 (CN); LI, Na, Dongguan, Guangdong 523863 (CN)
(74) Representative: Murgitroyd & Company
(86) International application number: PCT/CN2021/111777
(87) International publication number: WO 2022/033475

(56) References cited:
- EP-A1- 3 148 281
- EP-A1- 3 614 781
- EP-A1- 3 780 871
- WO-A1-2018/058408
- WO-A1-2018/203809
- WO-A1-2018/203809
- WO-A1-2019/014904
- WO-A1-2019/062624
- CN-A- 109 982 444
- HUAWEI ET AL: "RAR reception for multiple Msg1 transmissions", vol. RAN WG2, no. Berlin, Germany; 20170821 - 20170825, 20 August 2017 (2017-08-20), XP051319021, Retrieved from the Internet <URL:http://www.3gpp.org/ftp/Meetings_3GPP_SYNC/RAN2/Docs/> [retrieved on 20170820]

## Description

### TECHNICAL FIELD

This application pertains to the field of communications technologies, and specifically, relates to a signal transmission method for random access, a terminal, and a network-side device.

### BACKGROUND

In scenarios where industrial wireless sensors, video surveillance, wearable devices, or the like are used, terminals are required to have reduced complexity in various aspects including receive antenna, numbers of receive and transmit antennas, bandwidth supported, time and capability for processing data and signals, and the like. Such terminals are referred to as reduced capability terminals (Reduced Capability UE, RedCap UE), where the reduced numbers of receive and transmit antennas and the reduced bandwidth supported affect coverage capability of the terminals.

Random access (Random Access, RA) is a basic function of a cellular system which enables a terminal to set up a connection with a network-side device, and a random access procedure is a procedure starting from a terminal transmitting a random access preamble to attempt to access a network-side device and ending when a basic signaling connection is set up with the network-side device. The terminal exchanges information with the network-side device through random access, so as to complete subsequent operations such as calling, resource requesting, and data transmission.

Currently, in the random access procedure defined in Rel 15/16, a terminal transmits one random access preamble at a time, and a network-side device returns a response with respect to each random access preamble received. This means that the terminal is to receive a response corresponding to each random access preamble in a corresponding receiving window. However, with weaker transmission and reception capabilities than a normal terminal, a RedCap terminal needs to perform multiple random access preamble transmissions and multiple response message receptions. As a result, this is much likely to cause a longer latency for the terminal to complete handling the random access response.

EP 3780871A1 discloses that at least some wireless devices may use and/or require different quantities of repetitions of one or more transmissions based on one or more factors such as received signal strength and/or other channel condition(s). The quantity of repetitions may be less than or equal to a maximum quantity of repetitions that may be indicated by a base station.

HUAWEI et al: "RAR reception for multiple Msg1 transmissions", 3GPP DRAFT, R2-1709257 (XP051319021), proposes that RAR window starts a fixed duration after the preamble transmission occasion for the last Msg1 transmission.

EP 361781A1 discloses that a terminal device transmits a plurality of preambles to a network device in one random access procedure, and the terminal device monitors a random access response (RAR) to at least one preamble in the plurality of preambles in at least one RAR.

WO 2018203809A1 discloses that a terminal device obtains a resource configuration for a random-access transmission window comprising a plurality of random-access preamble transmission opportunities; then, the terminal device obtains a resource configuration for a RAR window associated with the random-access transmission window; and responsive to a determination of a need to perform a random-access procedure, the terminal device transmits, to a network node of the wireless communication network, a plurality of random-access preamble messages in the plurality of random-access preamble transmission opportunities; and listens for one or more random-access response messages in the RAR window.

### SUMMARY

Embodiments of this application provide a signal transmission method for random access, a terminal, and a network-side device, to resolve the problem of low efficiency of handling a random access response.

According to a first aspect, a signal transmission method for random access is provided and defined in claim 1.

According to a second aspect, a signal transmission method for random access is provided and defined in claim 9.

According to a third aspect, a terminal is provided and defined in claim 13.

According to a fourth aspect, a network-side device is provided and defined in claim 14.

According to a fifth aspect, a readable storage medium is provided and defined in claim 15.

Further advantageous embodiments are indicated in the dependent claims. It is to be understood that both of the foregoing application and the following detailed description are exemplary only, are not restrictive of the present application.

### BRIEF DESCRIPTION OF DRAWINGS

FIG. 1 is a structural diagram of a network system to which embodiments of this application are applicable;
FIG. 2 is a schematic flowchart of a signal transmission method for random access according to an embodiment of this application;
FIG. 3 is a random access interaction diagram of 4-step CBRA;
FIG. 4 is a random access interaction diagram of 2-step CBRA;
FIG. 5 is a random access interaction diagram of 4-step CFRA;
FIG. 6 is a random access interaction diagram of 2-step CFRA;
FIG. 7 is a random access interaction diagram according to an embodiment of this application;
FIG. 8 is a schematic flowchart of a signal transmission method for random access according to an embodiment of this application;
FIG. 9 is a schematic modular diagram of a signal transmission apparatus for random access according to an embodiment of this application;
FIG. 10 is a schematic modular diagram of a signal transmission apparatus for random access according to an embodiment of this application;
FIG. 11 is a structural block diagram of a communications device according to an embodiment of this application;
FIG. 12 is a structural block diagram of a terminal according to an embodiment of this application; and
FIG. 13 is a structural block diagram of a network-side device according to an embodiment of this application.

### DESCRIPTION OF EMBODIMENTS

The terms "first", "second", and the like in this specification and claims of this application are used to distinguish between similar objects rather than to describe a specific order or sequence. It should be understood that data used in this way is interchangeable in appropriate circumstances such that the embodiments of this application can be implemented in other orders than the order illustrated or described herein. In addition, objects distinguished by "first" and "second" are generally of a same type, and the object quantities are not limited, for example, there may be one or more first objects. In addition, in this specification and claims, "and/or" indicates at least one of connected objects, and the character "/" generally indicates an "or" relationship between associated objects.

It should be noted that the technologies described in the embodiments of this application are not limited to long term evolution (Long Term Evolution, LTE)/LTE-advanced (LTE-Advanced, LTE-A) systems, but may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described herein may be used in the above-mentioned systems and radio technologies as well as other systems and radio technologies. However, in the following descriptions, a new radio (New Radio, NR) system is described for illustrative purposes, and NR terms are used in most of the following descriptions, although these technologies may also be applied to other applications than the NR system application, for example, the 6th generation (6th Generation, 6G) communications systems.

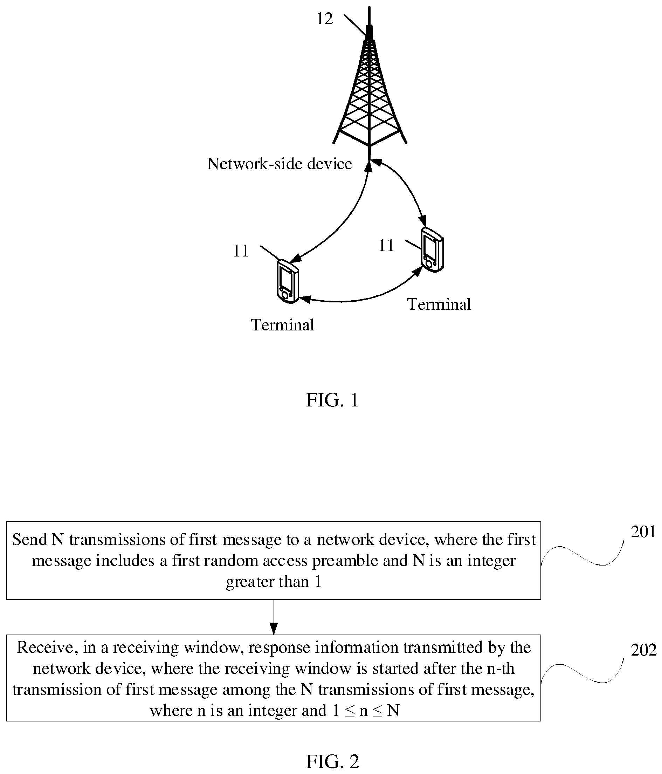

FIG. 1 is a block diagram of a wireless communications system to which embodiments of this application are applicable. The wireless communications system includes a terminal 11 and a network-side device 12. The terminal 11 may also be referred to as a terminal device or a user terminal (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or vehicle user equipment (Vehicle User Equipment, VUE), or pedestrian user equipment (Pedestrian User Equipment, PUE). The wearable device includes wrist bands, earphones, glasses, and the like. It should be noted that the terminal 11 is not limited to any specific type in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (evolved Node B, eNB), a home NodeB, a home evolved NodeB, a wireless local area network (wireless local area network, WLAN) access point, a wireless fidelity (wireless fidelity, WiFi) node, a transmission-reception point (Transmitting Receiving Point, TRP), or some other appropriate term in the art. As long as the same technical effects are achieved, the base station is not limited to any specific technical term. It should be noted that the base station in the NR system is used as an only example in the embodiments of this application, and the base station is not limited to any specific type.

The following describes in detail a signal transmission method for random access provided in the embodiments of this application through specific embodiments and application scenarios thereof with reference to the accompanying drawings.

As shown in FIG. 2, an embodiment of this application provides a signal transmission method for random access, performed by a terminal and including:

Step 201: Send N transmissions of first message to a network-side device, where the first message includes a first random access preamble and N is an integer greater than 1.

Step 202: Receive, in a receiving window, response information transmitted by the network-side device, where the receiving window is started after the n-th transmission of first message among the N transmissions of first message, where n is an integer and 1 ≤ n ≤ N.

The receiving window may be understood as a time window. The terminal can receive response information returned by the network-side device with respect to a first message received, only when the receiving window is started. In the random access procedure, the terminal sends N transmissions of first message to the network-side device, where the first message includes a first random access preamble, and then receives, in the receiving window started after the n-th transmission of first message among the N transmissions of first message, the response information transmitted by the network-side device. It should be noted that, in the case of successful reception of first messages, the network-side device returns response information with respect to one first message among the first messages successfully received.

In the embodiments of this application, the terminal sends N transmissions of first message to the network side to increase the probability of successful random access, and receives, in the receiving window, the response information transmitted by the network-side device, where the receiving window is started after the n-th transmission of first message among the N transmissions of first message. In other words, the terminal sends N transmissions of first message, and receives, in the receiving window started after the n-th transmission of first message among the N transmissions of first message, the response information transmitted by the network-side device. The response information is transmitted by the network-side device in the corresponding receiving window after the n-th transmission of first message among the N transmissions of first message by the terminal. This can reduce the number of response information transmissions by the network-side device, and reduce the number of response information receptions by the terminal, improving reception performance for the response information, thereby increasing efficiency of handling a random access response.

In an example, for the sending N transmissions of first message, the first message sent in each transmission may be the same or different. For example, repetitions of a first message including a same random access preamble may be transmitted, or a plurality of first messages including different random access preambles which satisfy a preset rule may be transmitted.

In an example, the receiving window may be started after every s transmissions of first message among the N transmissions of first message, where s is a positive integer. In this way, the receiving window is started at given intervals, which reduces start frequency of the receiving window and improves reception performance for the response information.

Optionally, the first message may be the first random access preamble, or the first message includes the first random access preamble and physical uplink shared channel (physical uplink shared channel, PUSCH) payload.

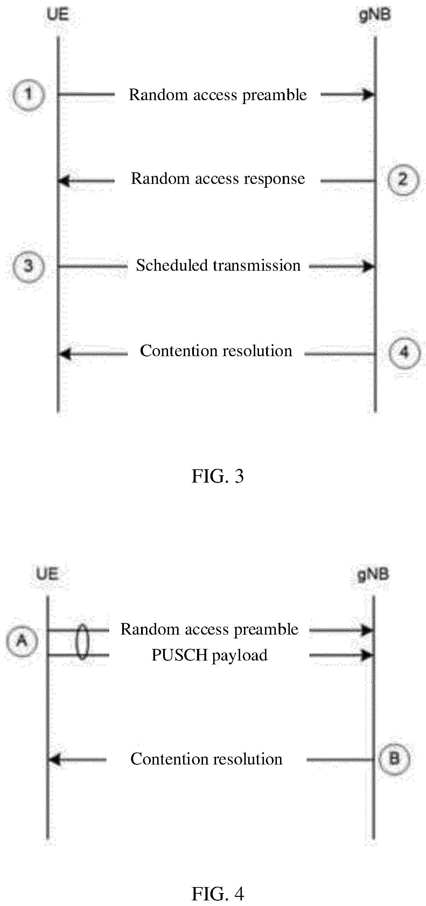

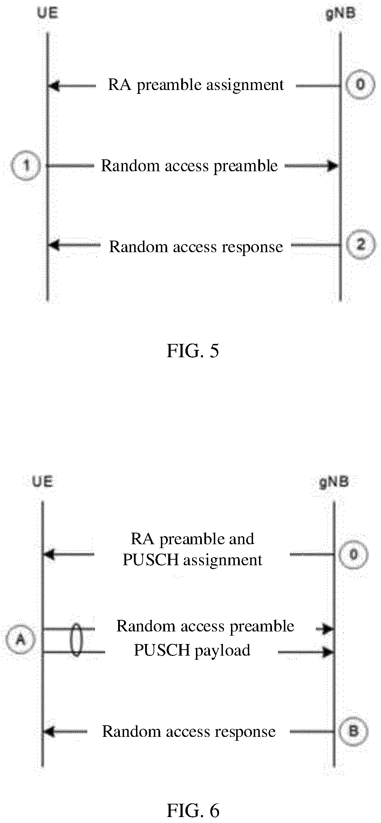

NR (New Radio, new radio) supports two types of random access procedures: a 4-step RA (Random Access, random access) type (4-step RACH (Random Access Channel, random access channel)) and a 2-step RA type. Both the two types of RA procedures support contention-based random access (Contention based Random Access, CBRA) and contention-free random access (Contention free Random Access, CFRA). A 4-step CBRA procedure is shown in FIG. 3, a 4-step CFRA procedure is shown in FIG. 5, a 2-step CBRA procedure type is shown in FIG. 4, and a 2-step CFRA procedure is shown in FIG. 6. For the above two types, the terminal transmits different messages to the network side in the random access procedure. For example, for 4-step RA, a first message transmitted by the terminal to the network-side device is a first random access preamble. In this case, the first message may be a random access preamble (Random Access Preamble, RAP), and response information received includes a random access response (random access responses in FIG. 3 and FIG. 5, that is, RAP). For 2-step RA, a first message transmitted by the terminal to the network-side device includes a first random access preamble and physical uplink shared channel PUSCH payload (PUSCH payload in FIG. 4 and FIG. 6). In this case, the first message may be MSGA. For 2-step CFRA, response information received includes a random access response (a random access response in FIG. 6). For 2-step CBRA, response information received includes radio resource control (Radio Resource Control, RRC) connection setup. After receiving the response information, the terminal removes contention, that is, contention resolution (Contention Resolution). It should be noted that the terminal uses a physical random access channel (Physical Random Access Channel, PRACH) to transmit the first message to the network-side device.

It should be noted that 1 ≤ n ≤ N, means that n may be less than N and equal to N, to be specific, the receiving window is started after the last transmission of first message among the N transmissions of first message, or the receiving window is started after a transmission other than the last transmission of first message among the N transmissions of first message.

Optionally, in a case that n is equal to N, one receiving window is present, and the receiving window is started after the last transmission of first message among the N transmissions of first message. It can be understood that the terminal may activate the receiving window after the N transmissions of first message, that is, the terminal activates the receiving window once, and the receiving window corresponds to the N first messages. The terminal activates the receiving window after the N transmissions of first message, and receives, in the receiving window, the response information returned by the network-side device.

Optionally, the receiving window may alternatively be started after a transmission other than the last transmission of first message among the N transmissions of first message, that is, the receiving window is started after a transmission of first message before the end of the N transmissions of first message, so as to receive the response information transmitted by the network-side device. It should be noted that one or more receiving windows may be started in a case that n is less than N. In a case that multiple receiving windows are present, it can be understood that during the N transmissions of first message, receiving windows are started at intervals, and each receiving window corresponds to some of the first messages. In this way, the receiving window is started at given intervals, which reduces start frequency of the receiving window and improves reception performance for the response information.

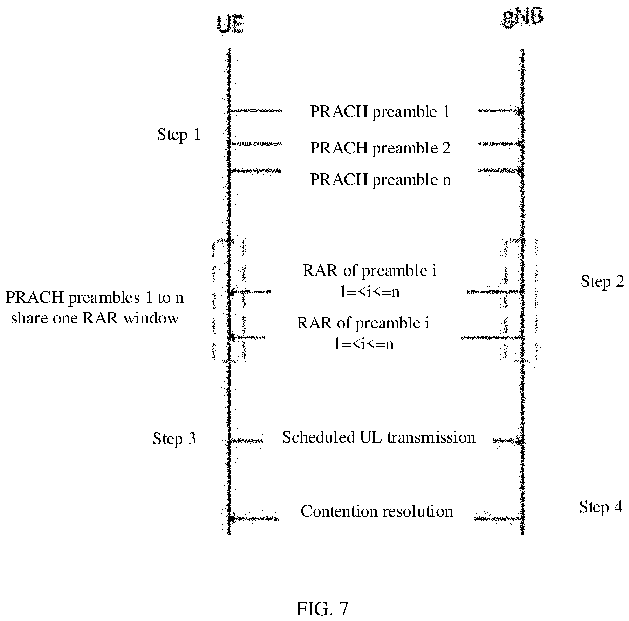

As shown in FIG. 7, UE is a terminal, and gNB is a network-side device, for example, may be a base station. The terminal activates a receiving window (a dashed line in the figure) after transmitting the n-th first message to the network-side device, and the 1st first message to the n-th first message share one receiving window. Similarly, the network-side device activates a response window. The network-side device transmits response information in the response window, and the terminal receives, in the receiving window, the response information transmitted by the network-side device. If the transmission of first message is determined to be successful based on the response information, the third step (step 3) is performed, that is, the terminal transmits a connection setup request to the network-side device, and the network-side device returns an acknowledgement after receiving the request to set up a connection.

In addition, optionally, during the N transmissions of first message, if a condition for stopping the transmission is met, the transmission of first message may be stopped. The transmission stop condition may include that the number of the transmissions of first message reaches a transmission number threshold, for example, the transmission number threshold is N, and transmission is stopped after the N transmissions of first message. And/or, the condition for stopping the transmission may alternatively be that the terminal receives response information returned by the network-side device with respect to the first message. For example, the terminal activates the receiving window after transmitting the n-th first message, and successfully receives, in the receiving window, the response information returned by the network-side device, which means that the network-side device successfully receives the first message and subsequent interaction can be performed. In this case, the terminal can stop subsequent transmissions of first message. It should be noted that the transmission number threshold may be determined according to a higher layer signaling configuration transmitted by the network-side device or according to a rule of a protocol.

Optionally, in a case that n is less than N, a start time of the receiving window corresponds to a time of a start orthogonal frequency division multiplexing (Orthogonal Frequency Division Multiplexing, OFDM) symbol in the 1st type 1 search space following the end of the n-th transmission of first message among the N transmissions of first message.

Type 1 search space is also called common search space (Common Search Space, CSS), and type 1 search spaces may appear at intervals as specified in the protocol or predefined by the terminal and the network-side device. It can be understood that the start time of the receiving window is an appearing time of the start OFDM symbol in the 1st type 1 search space following the end of the n-th transmission of first message, and duration of the receiving window does not exceed 10 milliseconds.

Optionally, in a case that n is less than N, a plurality of receiving windows are present, where the j-th receiving window is started after the nⱼ-th transmission of first message among the N transmissions of first message, the j-th receiving window corresponds to iⱼ first messages, nⱼ is a sum of nⱼ₋₁ corresponding to the (j-1)-th receiving window and iⱼ, n₁ is i₁ corresponding to the 1st receiving window, and the iⱼ first messages include a first message sent in the nⱼ-th transmission and iⱼ-1 first messages transmitted nearest to a time of the nⱼ-th transmission of first message, where iⱼ is an integer, and 1 ≤ iⱼ ≤ n, 1 ≤ j ≤ N, and 1 ≤ nⱼ ≤ N.

The 1st receiving window is started after the n₁-th transmission of first message among the N transmissions of first message, n₁ is i₁, and a sum of quantities of the first messages corresponding to the plurality of receiving windows is N. Each receiving window has corresponding first messages. For example, for the j-th receiving window, the corresponding iⱼ first messages include first messages send in the (nⱼ-iⱼ+1)-th to nⱼ-th transmissions, and iⱼ may be determined according to a specification of the protocol or a configuration of the network-side device, meaning that the iⱼ first messages correspond to a same receiving window, that is, the j-th receiving window. The iⱼ-1 first messages transmitted before the (nⱼ-iⱼ+1)-th transmission correspond to a previous receiving window started, that is, the (j-1)-th receiving window. The (j-1)-th receiving window is started after the (nⱼ-1)-th transmission of first message among the N transmissions of first message, the (j-1)-th receiving window corresponds to the iⱼ-1 first messages, and nⱼ₋₁ is a sum of nⱼ₋₂ corresponding to the (j-2)-th receiving window and iⱼ₋₁. For example, in a case that j is 1, j corresponds to the 1st receiving window, n₁ is 5, i₁ is 5, and a receiving window is started after the n₁-th (that is, 5th) transmission of first message. In this case, the receiving window corresponds to five first messages sent in the 1st to 5th transmissions. In a case that j is 2, j corresponds to the 2nd receiving window, n₂ is 10, i₂ is 5, and another receiving window is started after the n₂-th (that is, 10th) transmission of first message. In this case, the receiving window corresponds to five first messages sent in the 6th to 10th transmissions.

Optionally, the method further includes: in a case that iⱼ first messages that have been transmitted and are corresponding to the j-th receiving window include a first message whose first random access preamble matches indication information in response information received in the j-th receiving window, determining that transmission of the matched first message is successful.

The network-side device may return response information corresponding to first messages which correspond to a receiving window. With respect to first messages corresponding to a same receiving window transmitted by the terminal, after successfully receiving at least one of the first messages, the network-side device may return response information to the terminal to indicate that the first message has been successfully received, and then matching is performed between indication information in the response information and a first random access preamble in the first message corresponding to the receiving window. In a case that the first messages corresponding to the receiving window include a first message whose first random access preamble matches the indication information, it indicates that transmission of the matched first message is successful. In other words, in this embodiment, after the response information is received in the receiving window, matching needs to be performed between the indication information carried in the response information and the first random access preamble in the first message corresponding to the receiving window. If at least one matched first message is found, it indicates that transmission of the matched first message is successful.

In a case that the terminal maintains an RA-RNTI or MSGB-RNTI and a receiving window for an RAR (PRACH) or MSGA transmitted at a time, where RAR is short for RACH access response, meaning a random access response, it is determined whether a preamble carried in the RAR (response information returned based on a first message by the network-side device in the CBRA and CFRA with 4-step RA) or MSGB (response information returned based on a first message by the network-side device in the CBRA and CFRA with 2-step RA) matches a preamble in the RAR or MSGA corresponding to the RA-RNTI or MSGB-RNTI, and then whether transmission of the RAP or MSGA is successful. In a case that the terminal maintains an RA-RNTI or MSGB-RNTI and a receiving window for a group of RAPs or MSGAs, it is determined whether a preamble carried in the RAR or MSGB matches a preamble in the group of PRACHs or MSGAs corresponding to the RA-RNTI or MSGB-RNTI, to determine whether transmission of the PRACH or MSGA is successful.

It should be noted that the indication information in the response information may be a random access preamble. To distinguish from the first random access preamble in the first message, the indication information in the response information may be called a second random access preamble.

Optionally, the receiving, in a receiving window, response information transmitted by the network-side device includes: receiving, in the receiving window, a physical downlink control channel (physical downlink control channel, PDCCH) scrambled using a radio network temporary identifier; and receiving, using a physical downlink shared channel (physical downlink shared channel, PDSCH) resource indicated by the PDCCH, the response information transmitted by the network-side device.

After the receiving window is started after a transmission of first message, the terminal can start detecting a type 1 CSS PDCCH. In a case that the physical downlink control channel PDCCH scrambled using a radio network temporary identifier is detected, the response information transmitted by the network-side device can be received using the PDSCH resource indicated by the PDCCH. It should be noted that 4-step RA and 2-step RA have respective radio network temporary identifiers. For 4-step RA, the terminal transmits a first random access preamble to the network-side device, and a radio network temporary identifier is a random access radio network temporary identifier (that is, RA-RNTI, where RNTI is short for radio network temporary identifier, a radio network temporary identifier). For 2-step RA, the terminal transmits a first random access preamble and PUSCH payload to the network-side device. For example, the first random access preamble and PUSCH payload are referred to as MSGA signals, response information returned by the network-side device may be represented as MSGB, and a radio network temporary identifier is MSGB-RNTI. In other words, the radio network temporary identifier may be RA-RNTI or MSGB-RNTI.

Optionally, the in a case that iⱼ first messages that have been transmitted and are corresponding to the j-th receiving window include a first message whose first random access preamble matches indication information in response information received in the j-th receiving window, determining that transmission of the matched first message is successful includes:
in a case that the indication information in the response information received in the j-th receiving window matches a first random access preamble in a target message among the iⱼ first messages that have been transmitted and are corresponding to the j-th receiving window, determining that transmission of the target message is successful, where the target message is a first message among the iⱼ first messages that corresponds to a radio network temporary identifier obtained by the terminal.

If matching is successful between the first random access preamble in the first message corresponding to the radio network temporary identifier and the indication information in the response information received in the j-th receiving window, it indicates that transmission of the first message corresponding to the radio network temporary identifier among the iⱼ first messages corresponding to the j-th receiving window is successful. In other words, in this embodiment, matching is not required to be performed between the indication information and the first random access preambles in the iⱼ first messages transmitted one by one, and matching is performed directly between the indication information and the first message among the iⱼ first messages that corresponds to the radio network temporary identifier, which increases efficiency of matching.

Optionally, after the nⱼ-th transmission of first message to the network-side device, the method further includes:
determining a radio network temporary identifier according to a target time-frequency resource specified in a protocol or indicated by first indication information transmitted by the network-side device.

The terminal may calculate the radio network temporary identifier according to the target time-frequency resource specified in the protocol or the first indication information transmitted by the network-side device, where the first indication information is used to indicate the target time-frequency resource, meaning that the radio network temporary identifier is calculated according to the target time-frequency resource indicated by the first indication information.

Optionally, the determining a radio network temporary identifier according to a target time-frequency resource specified in a protocol or indicated by first indication information transmitted by the network-side device includes: determining the radio network temporary identifier according to an offset parameter and the target time-frequency resource.

In other words, in this embodiment, the terminal may calculate the radio network temporary identifier according to the offset parameter and target time-frequency resource, so as to ensure that the RNTI corresponding to the N first messages is different from the RNTI defined in Rel 15/16, thereby preventing terminal behavior ambiguity. In a possible manner, the offset parameter is introduced in a calculation formula for calculating RNTI to implement the foregoing function. The offset parameter may be applied to an existing parameter in the RNTI calculation formula or used as a fixed offset constant to be added into the RNTI calculation formula. In another possible manner, the N RNTIs corresponding to the N first messages are calculated, and the RNTI is calculated based on the N RNTIs, for example, through weighted averaging.

In an example, the offset parameter may include a first offset corresponding to a number of the first OFDM symbol on a PRACH for transmitting first messages, a second offset corresponding to a number of the first slot in which the PRACH for transmitting first messages is located, and the like. It should be noted that the offset parameter may be predefined. OffsetA and OffsetB are greater than or equal to 0, and at least one of them is not 0. OffsetA, OffsetB, or a combination thereof is used for distinguishing from a common RA-RNTI or MSGB-RNTI. OffsetA, OffsetB, or a combination thereof is further used for determining the number of repeated transmissions or repeated receptions of the RAPs or MSGAs. Values of OffsetA and/or OffsetB may be associated with a PRACH time-frequency resource parameter or a PRACH transmission format. In a possible selection criterion, it is ensured that all values of s_id + OffsetA or t_id + OffsetB are the same as none of possible values of s_id or t_id, where s_id and t_id are determined by configuration of the PRACH transmission format and transmission occasion of PRACH as configured by system information. The offset parameter may be explicitly configured according to the system information, or implicitly determined according to the PRACH transmission format and transmission occasion configured by the system information with reference to the rule predefined in the protocol.

In an example, the radio network temporary identifier may be calculated according to the following formulas: RA-RNTI = 1 + (s_id + OffsetA) + 14 × (t_id + OffsetB) + 14 × 80 × f_id + 14 × 80 × 8 × ul_carrier_id; and MSGB-RNTI = 1 + (s_id + OffsetA) + 14 × (t_id + OffsetB) + 14 × 80 × f_id + 14 × 80 × 8 × ul_carrier_id + 14 × 80 × 8 × 2.

Here, s_id is the number of the first OFDM symbol on the PRACH for transmitting first messages, t_id is the number of the first slot in which the PRACH for transmitting first messages is located, OffsetA is the first offset, OffsetB is the second offset, f_id is a frequency domain number of the PRACH for transmitting first messages, and ul_carrier_id is an identifier indicating a type of an uplink carrier for transmitting first messages, for example, 0 represents an NUL carrier, and 1 represents an SUL carrier.

The target time-frequency resource includes any one of the following:
a time-frequency resource of a first message earliest transmitted among the iⱼ first messages;
a time-frequency resource of a first message last transmitted among the iⱼ first messages; and
a random access channel occasion for a first message specified in the protocol or indicated by the first indication information among the iⱼ first messages.

It should be noted that the time-frequency resource of the first message earliest transmitted may be understood as a time-frequency resource of a first message earliest transmitted among first messages corresponding to a currently started receiving window, and a first message earliest transmitted corresponding to a previous receiving window is not included.

For multiple transmissions of first message, a correspondence between dedicated preambles (preamble) and random access channel occasions (RACH occasion, RO) (including selection of preamble and selection of RO for each transmission of first message) is specified in the protocol or notified by the system. RO for one transmission of first message among the multiple transmissions of first message is taken as a reference point to calculate the RA-RNTI or MSGB-RNTI, to represent the multiple transmissions of first message.

Optionally, after the determining that transmission of the first message is successful, the method further includes: determining, according to the indication information in the response information or/and a radio network temporary identifier, a reference signal that satisfies a quasi co-location relationship with the response information, where the reference signal includes a synchronization signal block SSB or a network-configured reference signal.

After the matched first message is determined to be successfully transmitted, it needs to be determined that the network-side device successfully receives a reference signal of the first message, that is, a target synchronization signal block (Synchronization Signal and PBCH block, SSB) satisfying a quasi co-location (Quasi co-location, QCL) relationship with the response information or a network-configured reference signal satisfying a quasi co-location relationship with the response information needs to be determined. In an example, during subsequent transmission of signals by the terminal to the network-side device, the target SSB may be used for transmission to the network-side device, so as to improve transmission reliability.

Optionally, the determining a reference signal that satisfies a quasi co-location relationship with the response information includes any one of the following:
in a case that first messages associated with the radio network temporary identifier correspond to a same reference signal, determining that the response information satisfies a quasi co-location relationship with the same reference signal; and
in a case that first messages associated with the radio network temporary identifier correspond to a plurality of reference signals, determining a reference signal that satisfies a quasi co-location relationship with the response information, according to first random access preambles in the first messages corresponding to the plurality of reference signals and the indication information or radio network temporary identifier; and
determining, according to second indication information transmitted by the network-side device, a reference signal that satisfies a quasi co-location relationship with the response information, where the second indication information is carried on a PDCCH scrambled using a radio network temporary identifier or in the response information.

Optionally, after the determining a reference signal that satisfies a quasi co-location relationship with the response information, the method further includes: transmitting, by the terminal, a second message to the network-side device according to the quasi co-location relationship. For example, the second message may include contention resolution (connection setup request) in FIG. 3, and the second message may be represented by an MSG3 message.

Optionally, the response information further indicates the repetition number m, and the repetition number m indicates that the network-side device successfully detects the first message after transmitting m first messages. Further optionally, the terminal may transmit MSG3 messages for m times to the network-side device, so as to increase a rate of successful receptions of the MSG3 messages by the network-side device.

In a case that the RA-RNTI or MSGB-RNTI is associated with K RAPs or MSGAs which are associated with a same SSB or associated with K RAPs or MSGAs triggered by a PDCCH command, the RAR or MSGB massage satisfies a QCL relationship with the SSB or a demodulation reference signal (Demodulation Reference Signal, DMRS) of the PDCCH.

In a case that the RA-RNTI or MSGB-RNTI is associated with K RAPs or MSGAs which are associated with a plurality of SSBs, and RAPs or MSGA messages associated with different SSBs use different preambles, a QCL relationship between the RAR or MSGB massage and the SSB is determined according to a correspondence between random access preamble identifiers (preamble indexes) and a plurality of candidate preambles.

Several bits are added in an RAR, an MSGB, or downlink control information (Downlink Control Information, DCI) scrambled using the RA-RNTI or MSGB-RNTI to indicate that reception of the RAPs or MSGA messages is completed at the k-th transmission among the K transmissions, and the random access response (Rach access response, RAR) or MSGB satisfies a QCL relationship with an SSB corresponding to the k-th RAP or MSGA message.

Optionally, the N first messages are associated with P different first SSBs, and each first message is associated with one first SSB, where P is an integer; and
the sending N transmissions of first message to a network-side device includes:
determining a first random access channel occasion for each first message among the N first messages according to a correspondence between SSBs and random access channel occasions and the first SSB associated with each first message; and
transmitting the first messages to the network-side device according to the first random access channel occasions for the first messages.

The N first messages are associated with M (M ≥ 1) different SSBs, and the first messages are transmitted on corresponding ROs according to a correspondence between SSBs and RACH occasions (RO). A selection manner of the M SSBs is determined according to the rule predefined in the protocol. For example, the M SSBs may be selected according to SSB signal received strength. The number L of transmissions of a first message corresponding to an SSB among the M SSBs is determined according to the rule predefined in the protocol, and a sum of the number of transmissions corresponding to the M SSBs is N.

Optionally, the first random access channel occasions for the N first messages are configured on one physical random access channel occasion or more physical random access channel occasions that are consecutive.

For each transmission of first message, the network-side device uses a single detection manner for the first message. After one first message is successfully received, earliest time of start of the RAR receiving window is a slot in which a type 1 CSS appears, no earlier than the next slot. If another first message is transmitted in the current slot, the RAR receiving windows of the two first messages overlap. Therefore, PRACH ROs for multiple transmissions are configured on one slot or more slots that are consecutive, and correspond to a same RAR/MSGB receiving window start time. The type 1 CSS does not appear in the consecutive slots.

For example, for K transmissions among the N transmissions of first messages, for example, after L transmissions of a first message corresponding to an SSB end, and for another example, after transmissions of first message in one or more slots end, a quantity of slots is determined according to a type 1-CSS period, or a quantity of slots is determined according to a size of an RAR configuration window, so that the RAR windows do not overlap. The network-side device performs joint detection on the first messages, for example, a base station combines uplink signals of the plurality of ROs and then performs detection. A start manner of the RAR receiving window of the network-side device is specified by the protocol or indicated by a system message or a higher layer message. Optionally, the start manner of the RAR receiving window is associated with the detection behavior (joint detection or single detection) on the first message by the network-side device.

Optionally, in a case that a receiving window is started before the end of the previous receiving window (that is, window overlapping), and radio network temporary identifiers calculated of the two receiving windows are the same (calculated based on a same reference RO), the two receiving windows are combined into one receiving window, and an end time of the later receiving window is used as an end time of the receiving window combined.

Optionally, the receiving, in a receiving window, response information transmitted by the network-side device includes:
receiving, in the receiving window, a plurality of pieces of response information transmitted by the network-side device.

To increase a rate of successful receptions of response information by the terminal, the network-side device may transmit a plurality of pieces of response information, and the terminal receives, in the receiving window, the response information for multiple times. The number of the repeated receptions by the terminal may be defined by a protocol, configured by a higher layer, indicated by a PDCCH, or determined by the number of transmissions of a first message associated with an SSB.

For example, the repetition number of the RAR/MSGB may be determined according to the RA-RNTI or MSGB-RNTI. For example, L RAP transmissions corresponding to an SSB correspond to K RA-RNTIs or MSGB-RNTIs, the first RA-RNTI corresponds to one transmission of RAR/MSGB, and the network-side device transmits the RAR/MSGB once by using the first RA-RNTI if detecting the RAP or MSGA in the previous L/K transmissions. Similarly, if the RAP or MSGA is detected in the second group of L/K RA-RNTIs, the second RA-RNTI is used for transmitting the RAR/MSGB twice.

In addition, optionally, in FR2, in a case that the RA-RNTI or MSGB-RNTI is associated with K RAPs or MSGAs which are associated with a plurality of SSBs, according to an appearing sequence of ROs associated with the SSBs in the plurality of slots, PDCCHs (that is, corresponding DCI) scrambled using the RA-RNTI or MSGB-RNTI are sequentially transmitted on the type 1 CSS in different slots in a time-division manner, and a PDCCH satisfies a quasi co-location relationship with a corresponding SSB. The terminal uses a receive beam matched with the corresponding SSB to detect, according to a corresponding rule, the PDCCH scrambled using the RA-RNTI or MSGB-RNTI. Optionally, duration of the receiving window may be correspondingly enlarged.

It should be noted that the signal transmission method for random access provided in the embodiments of this application may be performed by a signal transmission apparatus for random access or a control module for performing the signal transmission method for random access in the signal transmission apparatus for random access. In the embodiments of this application, a signal transmission apparatus for random access performing the signal transmission method for random access is used as an example to describe the signal transmission apparatus for random access provided in the embodiments of this application.

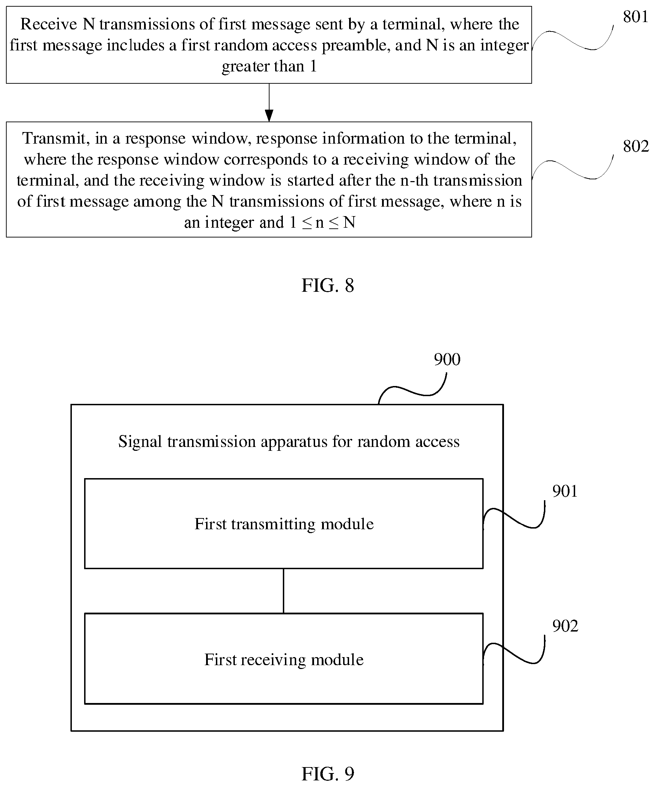

As shown in FIG. 8, a signal transmission method for random access is provided according to an embodiment. The method is performed by a network-side device and includes:

Step 801: Receive N transmissions of first message sent by a terminal, where the first message includes a first random access preamble and N is an integer greater than 1.

Step 802: Transmit, in a response window, response information to the terminal, where the response window corresponds to a receiving window of the terminal, and the receiving window is started after the n-th transmission of first message among the N transmissions of first message, where n is an integer and 1 ≤ n ≤ N.

Optionally, in a case that n is equal to N, one receiving window is present, and the receiving window is started after the last transmission of first message among the N transmissions of first message, one response window is present.

Optionally, in a case that n is less than N, a start time of the receiving window corresponds to a time of a start OFDM symbol in the 1st type 1 search space following the end of the n-th transmission of first message among the N transmissions of first message, and a start time of the response window corresponds to the start time of the receiving window.

Optionally, in a case that n is less than N, a plurality of receiving windows are present, where the j-th receiving window is started after the nⱼ-th transmission of first message among the N transmissions of first message, the j-th receiving window corresponds to iⱼ first messages, nⱼ is a sum of nⱼ₋₁ corresponding to the (j-1)-th receiving window and iⱼ, n₁ is i₁ corresponding to the 1st receiving window, and the iⱼ first messages include a first message sent in the nⱼ-th transmission and iⱼ-1 first messages transmitted nearest to a time of the nⱼ-th transmission of first message, where iⱼ is an integer, and 1 ≤ iⱼ ≤ n, 1 ≤ j ≤ N, and 1 ≤ nⱼ ≤ N; and
a plurality of response windows are present, the response windows are in the same quantity as the receiving windows, and the plurality of response windows are in a one-to-one correspondence with the plurality of receiving windows.

Optionally, after the first message sent in the nⱼ-th transmission by the terminal is received, the method further includes:
determining a radio network temporary identifier according to a target time-frequency resource specified in a protocol or set by the network-side device.

Optionally, the determining a radio network temporary identifier according to a target time-frequency resource specified in a protocol or set by the network-side device includes:
determining the radio network temporary identifier according to an offset parameter and the target time-frequency resource.

The target time-frequency resource includes any one of the following:
a time-frequency resource of a first message earliest transmitted among the iⱼ first messages;
a time-frequency resource of a first message last transmitted among the iⱼ first messages; and
a random access channel occasion for a first message specified in the protocol or indicated by the first indication information among the iⱼ first messages.

Optionally, the transmitting, in a response window, response information to the terminal includes:
transmitting, in the response window, a physical downlink control channel PDCCH scrambled using a radio network temporary identifier to the terminal; and
transmitting, using a PDSCH resource indicated by the PDCCH, the response information to the terminal.

Optionally, the first message is the first random access preamble, or the first message includes the first random access preamble and physical uplink shared channel PUSCH payload.

Optionally, the N first messages are associated with P different first SSBs, and each first message is associated with one first SSB, where P is an integer; and
the receiving N transmissions of first message sent by a terminal includes:
receiving the N transmissions of first message sent by the terminal, where the N transmissions of first message are sent according to first random access channel occasions for the N transmissions of first message, where
the first random access channel occasion is a first random access channel occasion for each first message among the N first messages, where the first random access channel occasion is determined by the terminal according to a correspondence between SSBs and physical random access channel occasions and the first SSB associated with each first message.

Optionally, the first random access channel occasions for the N first messages are configured on one physical random access channel occasion or more physical random access channel occasions that are consecutive.

Optionally, the transmitting, in a response window, response information to the terminal includes:
transmitting, in the response window, a plurality of pieces of response information to the terminal.

As shown in FIG. 9, an embodiment of this application further provides a signal transmission apparatus 900 for random access. The apparatus is applied to a terminal and includes:
a first transmitting module 901, configured to send N transmissions of first message to a network-side device, where the first message includes a first random access preamble and N is an integer greater than 1; and
a first receiving module 902, configured to receive, in a receiving window, response information transmitted by the network-side device, where the receiving window is started after the n-th transmission of first message among the N transmissions of first message, where n is an integer and 1 ≤ n ≤ N.

Optionally, in a case that n is equal to N, one receiving window is present, and the receiving window is started after the last transmission of first message among the N transmissions of first message.

Optionally, in a case that n is less than N, a start time of the receiving window corresponds to a time of a start OFDM symbol in the 1st type 1 search space following the end of the n-th transmission of first message among the N transmissions of first message.

Optionally, in a case that n is less than N, a plurality of receiving windows are present, where the j-th receiving window is started after the nⱼ-th transmission of first message among the N transmissions of first message, the j-th receiving window corresponds to iⱼ first messages, nⱼ is a sum of nⱼ₋₁ corresponding to the (j-1)-th receiving window and iⱼ, n₁ is i₁ corresponding to the 1st receiving window, and the iⱼ first messages include a first message sent in the nⱼ-th transmission and iⱼ-1 first messages transmitted nearest to a time of the nⱼ-th transmission of first message, where iⱼ is an integer, and 1 ≤ iⱼ ≤ n, 1 ≤ j ≤ N, and 1 ≤ nⱼ ≤ N.

Optionally, the method further includes:
in a case that iⱼ first messages that have been transmitted and are corresponding to the j-th receiving window include a first message whose first random access preamble matches indication information in response information received in the j-th receiving window, determining that transmission of the matched first message is successful.

Optionally, the in a case that iⱼ first messages that have been transmitted and are corresponding to the j-th receiving window include a first message whose first random access preamble matches indication information in response information received in the j-th receiving window, determining that transmission of the matched first message is successful includes:
in a case that the indication information in the response information received in the j-th receiving window matches a first random access preamble in a target message among the iⱼ first messages that have been transmitted and are corresponding to the j-th receiving window, determining that transmission of the target message is successful, where the target message is a first message among the iⱼ first messages that corresponds to a radio network temporary identifier obtained by the terminal.

Optionally, after the nⱼ-th transmission of first message to the network-side device, the method further includes:
determining a radio network temporary identifier according to a target time-frequency resource specified in a protocol or indicated by first indication information transmitted by the network-side device.

Optionally, the determining a radio network temporary identifier according to a target time-frequency resource specified in a protocol or indicated by first indication information transmitted by the network-side device includes:
determining the radio network temporary identifier according to an offset parameter and the target time-frequency resource.

The target time-frequency resource includes any one of the following:
a time-frequency resource of a first message earliest transmitted among the iⱼ first messages;
a time-frequency resource of a first message last transmitted among the iⱼ first messages; and
a random access channel occasion for a first message specified in the protocol or indicated by the first indication information among the iⱼ first messages.

Optionally, after the determining that transmission of the matched first message is successful, the method further includes:
determining, according to the indication information in the response information or/and a radio network temporary identifier, a reference signal that satisfies a quasi co-location relationship with the response information, where the reference signal includes a synchronization signal block SSB or a network-configured reference signal.

Optionally, the determining a reference signal that satisfies a quasi co-location relationship with the response information includes any one of the following:
in a case that first messages associated with the radio network temporary identifier correspond to a same reference signal, determining that the response information satisfies a quasi co-location relationship with the same reference signal; and
in a case that first messages associated with the radio network temporary identifier correspond to a plurality of reference signals, determining a reference signal that satisfies a quasi co-location relationship with the response information, according to first random access preambles in the first messages corresponding to the plurality of reference signals and the indication information or radio network temporary identifier; and
determining, according to second indication information transmitted by the network-side device, a reference signal that satisfies a quasi co-location relationship with the response information, where the second indication information is carried on a PDCCH scrambled using a radio network temporary identifier or in the response information.

Optionally, the receiving, in a receiving window, response information transmitted by the network-side device includes:
receiving, in the receiving window, a physical downlink control channel PDCCH scrambled using a radio network temporary identifier; and
receiving, using a PDSCH resource indicated by the PDCCH, the response information transmitted by the network-side device.

Optionally, the first message is the first random access preamble, or the first message includes the first random access preamble and physical uplink shared channel PUSCH payload.

Optionally, the N first messages are associated with P different first SSBs, and each first message is associated with one first SSB, where P is an integer; and
the sending N transmissions of first message to a network-side device includes:
determining a first random access channel occasion for each first message among the N first messages according to a correspondence between SSBs and physical random access channel occasions and the first SSB associated with each first message; and
transmitting the first messages to the network-side device according to the first random access channel occasions for the first messages.

Optionally, the first random access channel occasions for the N first messages are configured on one physical random access channel occasion or more physical random access channel occasions that are consecutive.

Optionally, the receiving, in a receiving window, response information transmitted by the network-side device includes:
receiving, in the receiving window, a plurality of pieces of response information transmitted by the network-side device.

The signal transmission apparatus for random access in the embodiments of this application may be an apparatus, or a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The signal transmission apparatus for random access in the embodiments of this application may be an apparatus with an operating system. The operating system may be an Android (Android) operating system, an iOS operating system, or another possible operating system, which is not specifically limited in the embodiments of this application.

The signal transmission apparatus for random access provided in the embodiments of this application can implement the processes that are implemented in the embodiments of the information determining method, with the same technical effects achieved. To avoid repetition, details are not described herein again.

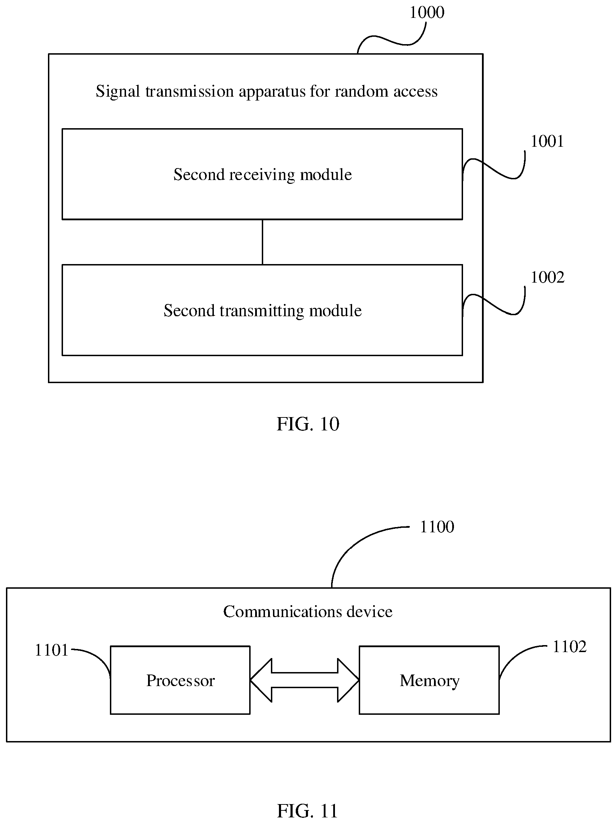

As shown in FIG. 10, an embodiment of this application further provides a signal transmission apparatus 1000 for random access. The apparatus is applied to a network-side device and includes:
a second receiving module 1001, configured to receive N transmissions of first message sent by a terminal, where the first message includes a first random access preamble and N is an integer greater than 1; and
a second transmitting module 1002, configured to transmit, in a response window, response information to the terminal, where the response window corresponds to a receiving window of the terminal, and the receiving window is started after the n-th transmission of first message among the N transmissions of first message, where n is an integer and 1 ≤ n ≤ N.

Optionally, in a case that n is equal to N, one receiving window is present, and the receiving window is started after the last transmission of first message among the N transmissions of first message, one response window is present.

Optionally, in a case that n is less than N, a start time of the receiving window corresponds to a time of a start OFDM symbol in the 1st type 1 search space following the end of the n-th transmission of first message among the N transmissions of first message, and a start time of the response window corresponds to the start time of the receiving window.

Optionally, in a case that n is less than N, a plurality of receiving windows are present, where the j-th receiving window is started after the nⱼ-th transmission of first message among the N transmissions of first message, the j-th receiving window corresponds to iⱼ first messages, nⱼ is a sum of nⱼ₋₁ corresponding to the (j-1)-th receiving window and iⱼ, n₁ is i₁ corresponding to the 1st receiving window, and the iⱼ first messages include a first message sent in the nⱼ-th transmission and iⱼ-1 first messages transmitted nearest to a time of the nⱼ-th transmission of first message, where iⱼ is an integer, and 1 ≤ iⱼ ≤ n, 1 ≤ j ≤ N, and 1 ≤ nⱼ ≤ N; and
a plurality of response windows are present, the response windows are in the same quantity as the receiving windows, and the plurality of response windows are in a one-to-one correspondence with the plurality of receiving windows.

Optionally, after the first message sent in the nⱼ-th transmission by the terminal is received, the method further includes:
determining a radio network temporary identifier according to a target time-frequency resource specified in a protocol or set by the network-side device.

Optionally, the determining a radio network temporary identifier according to a target time-frequency resource specified in a protocol or set by the network-side device includes:
determining the radio network temporary identifier according to an offset parameter and the target time-frequency resource.

The target time-frequency resource includes any one of the following:
a time-frequency resource of a first message earliest transmitted among the iⱼ first messages;
a time-frequency resource of a first message last transmitted among the iⱼ first messages; and
a random access channel occasion for a first message specified in the protocol or indicated by the first indication information among the iⱼ first messages.

Optionally, the transmitting, in a response window, response information to the terminal includes:
transmitting, in the response window, a physical downlink control channel PDCCH scrambled using a radio network temporary identifier to the terminal; and
transmitting, using a PDSCH resource indicated by the PDCCH, the response information to the terminal.

Optionally, the first message is the first random access preamble, or the first message includes the first random access preamble and physical uplink shared channel PUSCH payload.

Optionally, the N first messages are associated with P different first SSBs, and each first message is associated with one first SSB, where P is an integer; and
the receiving N transmissions of first message sent by a terminal includes:
receiving the N transmissions of first message sent by the terminal, where the N transmissions of first message are sent according to first random access channel occasions for the N transmissions of first message, where
the first random access channel occasion is a first random access channel occasion for each first message among the N first messages, where the first random access channel occasion is determined by the terminal according to a correspondence between SSBs and physical random access channel occasions and the first SSB associated with each first message.

Optionally, the first random access channel occasions for the N first messages are configured on one physical random access channel occasion or more physical random access channel occasions that are consecutive.

Optionally, the transmitting, in a response window, response information to the terminal includes:
transmitting, in the response window, a plurality of pieces of response information to the terminal.

The signal transmission apparatus for random access in the embodiments of this application may be an apparatus, or a component, an integrated circuit, or a chip in a network-side device. The network-side device may be a base station.

The signal transmission apparatus for random access provided in the embodiments of this application can implement the processes that are implemented in the embodiments of the signal transmission method for random access, with the same technical effects achieved. To avoid repetition, details are not described herein again.

Optionally, as shown in FIG. 11, an embodiment of this application further provides a communications device 1100, including a processor 1101, a memory 1102, and a program or instructions stored in the memory 1102 and executable on the processor 1101. For example, if the communications device 1100 is a terminal, when the program or instructions are executed by the processor 1101, the processes of the foregoing embodiments of the signal transmission method for random access are implemented, with the same technical effects achieved. If the communications device 1100 is a network-side device, when the program or instructions are executed by the processor 1101, the processes of the foregoing embodiments of the signal transmission method for random access are implemented, with the same technical effects achieved. To avoid repetition, details are not described herein again.

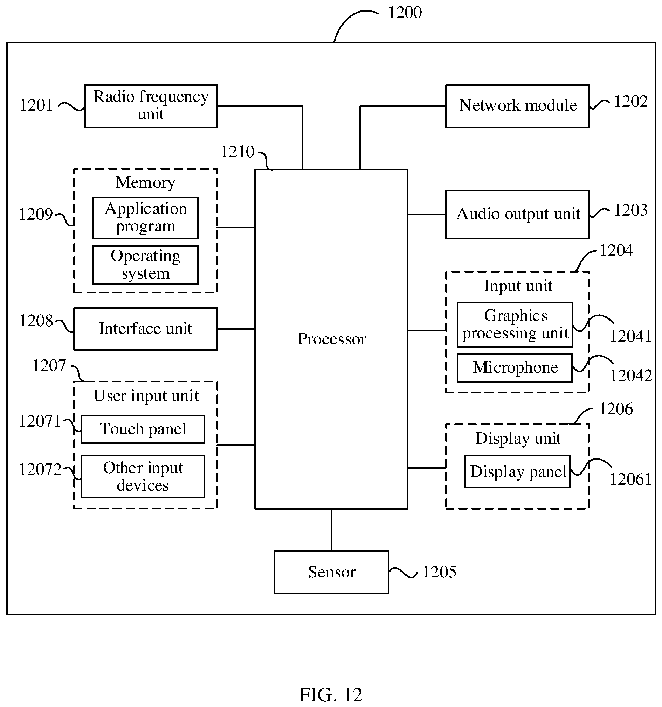

FIG. 12 is a schematic diagram of a hardware structure of a terminal for implementing the embodiments of this application.

The terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (such as a battery) for supplying power to the components. The power supply may be logically connected to the processor 1210 via a power management system. In this way, functions such as charge management, discharge management, and power consumption management are implemented via the power management system. The terminal structure shown in FIG. 12 does not constitute any limitation on the terminal. The terminal may include more or fewer components than shown in the figure, or combine some of the components, or have the components arranged differently, which are not further described herein.

It should be understood that in the embodiments of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in an image capture mode or a video capture mode. The display unit 1206 may include a display panel 12061, and the display panel 12061 may be configured in a form of a liquid crystal display, an organic light-emitting diode display, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a functional button (such as a volume control button or a power on/off button), a trackball, a mouse, and a joystick, which are not further described herein.

In the embodiments of this application, the radio frequency unit 1201 transmits downlink data received from a network-side device to the processor 1210 for processing, and in addition, transmits uplink data to the network-side device. Generally, the radio frequency unit 1201 includes but is not limited to an antenna, at least one amplifier, a transceiver, a coupler, a low noise amplifier, and a duplexer.

The memory 1209 may be configured to store software programs or instructions and various data. The memory 1209 may mainly include a program or instruction storage area and a data storage area. The program or instruction storage area may store an operating system, an application program or instruction required by at least one function (for example, a sound play function and an image play function), and the like. In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1210 may include one or more processing units. Optionally, the processor 1210 may integrate an application processor and a modem processor. The application processor mainly processes an operating system, a user interface, an application program or instruction, and the like. The modem processor mainly processes wireless communication, for example, a baseband processor. It can be understood that the modem processor may alternatively be not integrated into the processor 1210.

The radio frequency unit 1201 is configured to: send N transmissions of first message to a network-side device, where the first message includes a first random access preamble and N is an integer greater than 1; and receive, in a receiving window, response information transmitted by the network-side device, where the receiving window is started after the n-th transmission of first message among the N transmissions of first message, where n is an integer and 1 ≤ n ≤ N.

Optionally, in a case that n is equal to N, one receiving window is present, and the receiving window is started after the last transmission of first message among the N transmissions of first message.

Optionally, in a case that n is less than N, a start time of the receiving window corresponds to a time of a start OFDM symbol in the 1st type 1 search space following the end of the n-th transmission of first message among the N transmissions of first message.

Optionally, in a case that n is less than N, a plurality of receiving windows are present, where the j-th receiving window is started after the nⱼ-th transmission of first message among the N transmissions of first message, the j-th receiving window corresponds to iⱼ first messages, nⱼ is a sum of nⱼ₋₁ corresponding to the (j-1)-th receiving window and iⱼ, n₁ is i₁ corresponding to the 1st receiving window, and the iⱼ first messages include a first message sent in the nⱼ-th transmission and iⱼ-1 first messages transmitted nearest to a time of the nⱼ-th transmission of first message, where iⱼ is an integer, and 1 ≤ iⱼ ≤ n, 1 ≤ j ≤ N, and 1 ≤ nⱼ ≤ N.

Optionally, the method further includes:
in a case that iⱼ first messages that have been transmitted and are corresponding to the j-th receiving window include a first message whose first random access preamble matches indication information in response information received in the j-th receiving window, determining that transmission of the matched first message is successful.

Optionally, the in a case that iⱼ first messages that have been transmitted and are corresponding to the j-th receiving window include a first message whose first random access preamble matches indication information in response information received in the j-th receiving window, determining that transmission of the matched first message is successful includes:
in a case that the indication information in the response information received in the j-th receiving window matches a first random access preamble in a target message among the iⱼ first messages that have been transmitted and are corresponding to the j-th receiving window, determining that transmission of the target message is successful, where the target message is a first message among the iⱼ first messages that corresponds to a radio network temporary identifier obtained by the terminal.

Optionally, after the nⱼ-th transmission of first message to the network-side device, the method further includes:
determining a radio network temporary identifier according to a target time-frequency resource specified in a protocol or indicated by first indication information transmitted by the network-side device.

Optionally, the determining a radio network temporary identifier according to a target time-frequency resource specified in a protocol or indicated by first indication information transmitted by the network-side device includes:
determining the radio network temporary identifier according to an offset parameter and the target time-frequency resource.

The target time-frequency resource includes any one of the following:
a time-frequency resource of a first message earliest transmitted among the iⱼ first messages;
a time-frequency resource of a first message last transmitted among the iⱼ first messages; and
a random access channel occasion for a first message specified in the protocol or indicated by the first indication information among the iⱼ first messages.

Optionally, after the determining that transmission of the matched first message is successful, the method further includes:
determining, according to the indication information in the response information or/and a radio network temporary identifier, a reference signal that satisfies a quasi co-location relationship with the response information, where the reference signal includes a synchronization signal block SSB or a network-configured reference signal.

Optionally, the determining a reference signal that satisfies a quasi co-location relationship with the response information includes any one of the following:
in a case that first messages associated with the radio network temporary identifier correspond to a same reference signal, determining that the response information satisfies a quasi co-location relationship with the same reference signal; and
in a case that first messages associated with the radio network temporary identifier correspond to a plurality of reference signals, determining a reference signal that satisfies a quasi co-location relationship with the response information, according to first random access preambles in the first messages corresponding to the plurality of reference signals and the indication information or radio network temporary identifier; and
determining, according to second indication information transmitted by the network-side device, a reference signal that satisfies a quasi co-location relationship with the response information, where the second indication information is carried on a PDCCH scrambled using a radio network temporary identifier or in the response information.

Optionally, the receiving, in a receiving window, response information transmitted by the network-side device includes:
receiving, in the receiving window, a physical downlink control channel PDCCH scrambled using a radio network temporary identifier; and
receiving, using a PDSCH resource indicated by the PDCCH, the response information transmitted by the network-side device.

Optionally, the first message is the first random access preamble, or the first message includes the first random access preamble and physical uplink shared channel PUSCH payload.

Optionally, the N first messages are associated with P different first SSBs, and each first message is associated with one first SSB, where P is an integer; and
the sending N transmissions of first message to a network-side device includes:
determining a first random access channel occasion for each first message among the N first messages according to a correspondence between SSBs and physical random access channel occasions and the first SSB associated with each first message; and
transmitting the first messages to the network-side device according to the first random access channel occasions for the first messages.

Optionally, the first random access channel occasions for the N first messages are configured on one physical random access channel occasion or more physical random access channel occasions that are consecutive.

Optionally, the receiving, in a receiving window, response information transmitted by the network-side device includes:
receiving, in the receiving window, a plurality of pieces of response information transmitted by the network-side device.

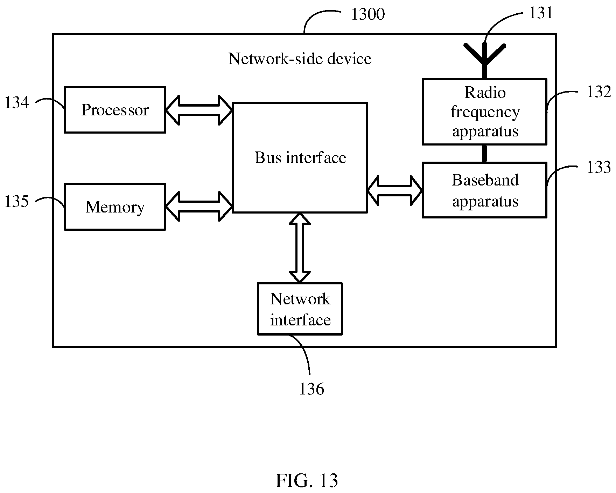

Specifically, an embodiment of this application further provides a network-side device. As shown in FIG. 13, the network-side device 1300 includes an antenna 131, a radio frequency apparatus 132, and a baseband apparatus 133. The antenna 131 is connected to the radio frequency apparatus 132. In an uplink direction, the radio frequency apparatus 132 receives information by using the antenna 131, and transmits the received information to the baseband apparatus 133 for processing. In a downlink direction, the baseband apparatus 133 processes to-be-transmitted information, and transmits the information to the radio frequency apparatus 132; and the radio frequency apparatus 132 processes the received information and then transmits the information by using the antenna 131.

The frequency band processing apparatus may be located in the baseband apparatus 133. The method performed by the network-side device in the foregoing embodiment may be implemented in the baseband apparatus 133, and the baseband apparatus 133 includes a processor 134 and a memory 135.

The baseband apparatus 133 may include, for example, at least one baseband processing unit, where a plurality of chips are disposed on the baseband processing unit. As shown in FIG. 13, one of the chips is, for example, the processor 134, and connected to the memory 135, to invoke a program in the memory 135 to perform the operations of the network-side device as shown in the foregoing method embodiment.

The baseband apparatus 133 may further include a network interface 136, configured to exchange information with the radio frequency apparatus 132, where the interface is, for example, a common public radio interface (common public radio interface, CPRI).

Specifically, the network-side device in this embodiment of this application further includes instructions or a program stored in the memory 135 and executable on the processor 134. The processor 134 invokes the instructions or program in the memory 135 to perform the signal transmission method for random access, with the same technical effects achieved. To avoid repetition, details are not described herein.

An embodiment of this application further provides a readable storage medium, where the readable storage medium stores a program or instructions, and when the program or instructions are executed by a processor, the processes of the foregoing embodiments of the signal transmission method for random access are implemented, with the same technical effects achieved. To avoid repetition, details are not described herein again.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions of a network-side device to implement the processes of the foregoing embodiments of the signal transmission method for random access, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In the absence of more restrictions, an element preceded by the statement "includes a ... " does not preclude the presence of other identical elements in the process, method, article, or apparatus that includes the element. In addition, it should be noted that the scope of the method and apparatus in the implementations of this application is not limited to functions being performed in the order shown or discussed, and may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Persons of ordinary skill in the art can realize that the units and algorithm steps in the examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

Persons skilled in the art can clearly understand that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may or may not be physically separate. The components displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

From the foregoing description of the implementations, persons skilled in the art can clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such understanding, the technical solutions of this application essentially or the part thereof that contributes to the prior art may be implemented in a form of a software product. The computer software product is stored in a storage medium (for example, ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

It can be understood that the embodiments described in the embodiments of this disclosure may be implemented by hardware, software, firmware, middleware, microcode, or a combination thereof. For hardware implementation, modules, units, and subunits may be implemented in one or more application specific integrated circuits (Application Specific Integrated Circuits, ASIC), digital signal processors (Digital Signal Processor, DSP), digital signal processing device (DSP Device, DSPD), programmable logic device (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the technologies described in the embodiments of this disclosure may be implemented by modules (for example, procedures or functions) that perform the functions described in the embodiments of this disclosure. Software code may be stored in the memory and executed by the processor. The memory may be implemented in or outside the processor.

## Claims

1. A signal transmission method for random access, performed by a terminal (11) and comprising:
sending (201) N transmissions of first message to a network-side device (12), wherein the first message comprises a first random access preamble and N is an integer greater than 1; and
receiving (202), in a receiving window, response information transmitted by the network-side device (12), wherein the receiving window is started after n-th transmission of first message among the N transmissions of first message, wherein n is an integer and 1 ≤ n ≤ N;
**characterized in that**,
the method further comprising:
determining a radio network temporary identifier according to a target time-frequency resource specified in a protocol or indicated by first indication information transmitted by the network-side device (12); wherein
the target time-frequency resource comprises at least one of following:
a time-frequency resource of a first message earliest transmitted among iⱼ first messages;
a time-frequency resource of a first message last transmitted among the iⱼ first messages; and
a random access channel occasion for a first message specified in the protocol or indicated by the first indication information among the iⱼ first messages; wherein
the iⱼ first messages comprise a first message sent in nⱼ-th transmission and iⱼ-1 first messages transmitted adjacent to a time of the nⱼ-th transmission of first message, wherein iⱼ is an integer, and 1 ≤ iⱼ ≤ n, 1 ≤ j ≤ N, and 1 ≤ nⱼ ≤ N.

2. The method according to claim 1, wherein in a case that n is equal to N, one receiving window is present; or
in a case that n is less than N, a start time of the receiving window corresponds to a time of a start orthogonal frequency division multiplex , OFDM, symbol in first type 1 search space following an end of the n-th transmission of first message among the N transmissions of first message.

3. The method according to claim 1, wherein in a case that n is less than N, a plurality of receiving windows are present, wherein j-th receiving window is started after the nⱼ-th transmission of first message among the N transmissions of first message, the j-th receiving window corresponds to the iⱼ first messages, nⱼ is a sum of nⱼ₋₁ corresponding to (j-1)-th receiving window and iⱼ, n₁ is i₁ corresponding to 1st receiving window, and the iⱼ first messages comprise a first message sent in the nⱼ-th transmission and the iⱼ-1 first messages transmitted adjacent to a time of the nⱼ-th transmission of first message, wherein iⱼ is an integer, 1 ≤ iⱼ ≤ n, 1 ≤ j ≤ N, and 1 ≤ nⱼ ≤ N.

4. The method according to claim 3, further comprising:
in a case that the iⱼ first messages that have been transmitted and are corresponding to the j-th receiving window comprise a first message whose first random access preamble matches indication information in response information received in the j-th receiving window, determining that transmission of the matched first message is successful.

5. The method according to claim 4, wherein the in a case that the iⱼ first messages that have been transmitted and are corresponding to the j-th receiving window comprise a first message whose first random access preamble matches indication information in response information received in the j-th receiving window, determining that transmission of the matched first message is successful comprises:
in a case that the indication information in the response information received in the j-th receiving window matches a first random access preamble in a target message among the iⱼ first messages that have been transmitted and are corresponding to the j-th receiving window, determining that transmission of the target message is successful, wherein the target message is a first message among the iⱼ first messages that corresponds to a radio network temporary identifier obtained by the terminal (11).

6. The method according to claim 4, wherein after the determining that transmission of the matched first message is successful, the method further comprises:
determining, according to the indication information in the response information or/and a radio network temporary identifier, a reference signal that satisfies a quasi co-location relationship with the response information, wherein the reference signal comprises a synchronization signal block, SSB, or a network-configured reference signal.

7. The method according to claim 1, wherein the receiving (202), in a receiving window, response information transmitted by the network-side device (12) comprises:
receiving, in the receiving window, a physical downlink control channel, PDCCH, scrambled using the radio network temporary identifier; and
receiving, using a physical downlink shared channel, PDSCH, resource indicated by the PDCCH, the response information transmitted by the network-side device (12).

8. The method according to claim 1, wherein the N first messages are associated with P different first synchronization signal blocks, SSBs, and each first message is associated with one first SSB, wherein P is an integer; and
the sending N transmissions of first message to a network-side device (12) comprises:
determining a first random access channel occasion for each first message among the N first messages according to a correspondence between SSBs and physical random access channel occasions and the first SSB associated with each first message; and
transmitting the first messages to the network-side device (12) according to the first random access channel occasions for the first messages.

9. A signal transmission method for random access, performed by a network-side device (12) and comprising:
receiving (801) N transmissions of first message sent by a terminal (11), wherein the first message comprises a first random access preamble and N is an integer greater than 1; and
transmitting (802), in a response window, response information to the terminal (11), wherein the response window corresponds to a receiving window of the terminal (11), and the receiving window is started after the n-th transmission of first message among the N transmissions of first message, wherein n is an integer and 1 ≤ n ≤ N;
**characterized in that**,
the method further comprising:
determining a radio network temporary identifier according to a target time-frequency resource specified in a protocol or indicated by first indication information transmitted by the network-side device (12); wherein
the target time-frequency resource comprises at least one of following:
a time-frequency resource of a first message earliest transmitted among iⱼ first messages;
a time-frequency resource of a first message last transmitted among the iⱼ first messages; and
a random access channel occasion for a first message specified in the protocol or indicated by the first indication information among the iⱼ first messages; wherein
the iⱼ first messages comprise a first message sent in nⱼ-th transmission and iⱼ-1 first messages transmitted adjacent to a time of the nⱼ-th transmission of first message, wherein iⱼ is an integer, and 1 ≤ iⱼ ≤ n, 1 ≤ j ≤ N, and 1 ≤ nⱼ ≤ N.

10. The method according to claim 9, wherein in a case that n is equal to N and one receiving window is present, one response window is present; or
in a case that n is less than N, a start time of the receiving window corresponds to a time of a start orthogonal frequency division multiplex , OFDM, symbol in first common search space following an end of the n-th transmission of first message among the N transmissions of first message, and a start time of the response window corresponds to the start time of the receiving window.

11. The method according to claim 9, wherein in a case that n is less than N, a plurality of receiving windows are present, wherein j-th receiving window is started after the nⱼ-th transmission of first message among the N transmissions of first message, the j-th receiving window corresponds to the iⱼ first messages, nⱼ is a sum of nⱼ₋₁ corresponding to (j-1)-th receiving window and iⱼ, n₁ is i₁ corresponding to 1st receiving window, and the iⱼ first messages comprise a first message sent in the nⱼ-th transmission and the iⱼ-1 first messages transmitted adjacent to a time of the nⱼ-th transmission of first message, wherein iⱼ is an integer, and 1 ≤ iⱼ ≤ n, 1 ≤ j ≤ N, and 1 ≤ nⱼ ≤ N; and
a plurality of response windows are present, the response windows are in the same quantity as the receiving windows, and the plurality of response windows are in a one-to-one correspondence with the plurality of receiving windows.

12. The method according to claim 9, wherein the N first messages are associated with P different first synchronization signal blocks, SSBs, and each first message is associated with one first SSB, wherein P is an integer; and
the receiving N transmissions of first message sent by a terminal (11) comprises:
receiving the N transmissions of first message sent by the terminal (11), wherein the N transmissions of first message are sent according to first random access channel occasions for the N transmissions of first message, wherein
the first random access channel occasion is a first random access channel occasion for each first message among the N first messages, wherein the first random access channel occasion is determined by the terminal (11) according to a correspondence between SSBs and physical random access channel occasions and the first SSB associated with each first message.

13. A terminal (1200), comprising a processor (1210), a memory (1209), and a program or instructions stored in the memory (1209) and executable on the processor (1210), wherein when the program or instructions are executed by the processor (1210), the steps of the signal transmission method for random access according to any one of claims 1 to 8 are implemented.

14. A network-side device (1300), comprising a processor (134), a memory (135), and a program or instructions stored in the memory (135) and executable on the processor (134), wherein when the program or instructions are executed by the processor (134), the steps of the signal transmission method for random access according to any one of claims 9 to 12 are implemented.

15. A readable storage medium, storing a program or instructions, and when the program or the instructions are executed by a processor (1210), the steps of the signal transmission method for random access according to any one of claims 1 to 8 are implemented, or
when the program or the instructions are executed by a processor (134), the steps of the signal transmission method for random access according to any one of claims 9 to 12 are implemented.

## Patentansprüche

1. Ein Signalübertragungsverfahren für Direktzugriff, das durch ein Endgerät (11) durchgeführt wird und Folgendes beinhaltet:
Senden (201) von N Übertragungen einer ersten Nachricht an eine netzwerkseitige Vorrichtung (12), wobei die erste Nachricht eine erste Direktzugriffspräambel beinhaltet und N eine ganze Zahl größer als 1 ist; und
Empfangen (202), in einem Empfangsfenster, von Antwortinformationen, die durch die netzwerkseitige Vorrichtung (12) übertragen werden, wobei das Empfangsfenster nach einer n-ten Übertragung der ersten Nachricht unter den N Übertragungen der ersten Nachricht gestartet wird, wobei n eine ganze Zahl ist und 1 ≤ n ≤ N;
**dadurch gekennzeichnet, dass**
das Verfahren ferner Folgendes beinhaltet:
Bestimmen einer temporären Funknetzwerkkennung gemäß einer Ziel-Zeit-Frequenz-Ressource, die in einem Protokoll spezifiziert ist oder durch erste Angabeinformationen, die durch die netzwerkseitige Vorrichtung (12) übertragen werden, angegeben wird;
wobei
die Ziel-Zeit-Frequenz-Ressource mindestens eines von Folgendem beinhaltet:
eine Zeit-Frequenz-Ressource einer ersten Nachricht, die unter iⱼ ersten Nachrichten zuerst übertragen wird;
eine Zeit-Frequenz-Ressource einer ersten Nachricht, die unter den iⱼ ersten Nachrichten zuletzt übertragen wird; und
ein Direktzugriffskanalereignis für eine erste Nachricht, das in dem Protokoll spezifiziert ist oder durch die ersten Angabeinformationen unter den iⱼ ersten Nachrichten angegeben wird; wobei
die iⱼ ersten Nachrichten eine erste Nachricht, die in einer nⱼ-ten Übertragung gesendet wird, und iⱼ - 1 erste Nachrichten, die angrenzend an eine Zeit der nⱼ-ten Übertragung der ersten Nachricht übertragen werden, beinhalten, wobei iⱼ eine ganze Zahl ist und 1 ≤ iⱼ ≤ n, 1 ≤ j ≤ N und 1 ≤ nⱼ ≤ N.

2. Verfahren gemäß Anspruch 1, wobei in einem Fall, in dem n gleich N ist, ein Empfangsfenster vorhanden ist; oder
in einem Fall, in dem n kleiner als N ist, eine Startzeit des Empfangsfensters einer Zeit eines Start-Orthogonal-Frequency-Division-Multiplex-Symbols, Start-OFDM-Symbols, in einem ersten Typ-1-Suchraum folgend auf ein Ende der n-ten Übertragung der ersten Nachricht unter den N Übertragungen der ersten Nachricht entspricht.

3. Verfahren gemäß Anspruch 1, wobei in einem Fall, in dem n kleiner als N ist, eine Vielzahl von Empfangsfenstern vorhanden ist, wobei ein j-tes Empfangsfenster nach der nⱼ-ten Übertragung der ersten Nachricht unter den N Übertragungen der ersten Nachricht gestartet wird, wobei das j-te Empfangsfenster den iⱼ ersten Nachrichten entspricht, nⱼ eine Summe aus nⱼ₋ᵢ, entsprechend dem (j - 1)-ten Empfangsfenster, und iⱼ ist, n₁ gleich i₁, entsprechend dem 1. Empfangsfenster, ist und die iⱼ ersten Nachrichten eine erste Nachricht, die in der nⱼ-ten Übertragung gesendet wird, und die iⱼ - 1 ersten Nachrichten, die angrenzend an eine Zeit der nⱼ-ten Übertragung der ersten Nachricht gesendet werden, beinhalten, wobei iⱼ eine ganze Zahl ist, 1 ≤ iⱼ ≤ n, 1 ≤ j ≤ N und 1 ≤ nⱼ ≤ N.

4. Verfahren gemäß Anspruch 3, das ferner Folgendes beinhaltet:
in einem Fall, in dem die iⱼ ersten Nachrichten, die übertragen wurden und dem j-ten Empfangsfenster entsprechen, eine erste Nachricht beinhalten, deren erste Direktzugriffspräambel mit Angabeinformationen in Antwortinformationen, die in dem j-ten Empfangsfenster empfangen werden, übereinstimmt, Bestimmen, dass die Übertragung der übereinstimmenden ersten Nachricht erfolgreich ist.

5. Verfahren gemäß Anspruch 4, wobei in einem Fall, in dem die iⱼ ersten Nachrichten, die übertragen wurden und dem j-ten Empfangsfenster entsprechen, eine erste Nachricht beinhalten, deren erste Direktzugriffspräambel mit Angabeinformationen in Antwortinformationen, die in dem j-ten Empfangsfenster empfangen werden, übereinstimmt, das Bestimmen, dass die Übertragung der übereinstimmenden ersten Nachricht erfolgreich ist, Folgendes beinhaltet:
in einem Fall, in dem die Angabeinformationen in den Antwortinformationen, die in dem j-ten Empfangsfenster empfangen werden, mit einer ersten Direktzugriffspräambel in einer Zielnachricht unter den iⱼ ersten Nachrichten, die übertragen wurden und dem j-ten Empfangsfenster entsprechen, übereinstimmen, Bestimmen, dass die Übertragung der Zielnachricht erfolgreich ist, wobei die Zielnachricht eine erste Nachricht unter den iⱼ ersten Nachrichten ist, die einer durch das Endgerät (11) erhaltenen temporären Funknetzwerkkennung entspricht.

6. Verfahren gemäß Anspruch 4, wobei nach dem Bestimmen, dass die Übertragung der übereinstimmenden ersten Nachricht erfolgreich ist, das Verfahren ferner Folgendes beinhaltet:
Bestimmen, gemäß den Angabeinformationen in den Antwortinformationen und/oder einer temporären Funknetzwerkkennung, eines Referenzsignals, das einer Quasi-Co-Lokalisierungsbeziehung mit den Antwortinformationen genügt, wobei das Referenzsignal einen Synchronisierungssignalblock, SSB, oder ein durch das Netzwerk konfiguriertes Referenzsignal beinhaltet.

7. Verfahren gemäß Anspruch 1, wobei das Empfangen (202), in einem Empfangsfenster, von Antwortinformationen, die durch die netzwerkseitige Vorrichtung (12) übertragen werden, Folgendes beinhaltet:
Empfangen, in dem Empfangsfenster, eines physischen Downlink-Steuerungskanals, PDCCH, der unter Verwendung der temporären Funknetzwerkkennung verschlüsselt wird; und
Empfangen, unter Verwendung einer Ressource eines gemeinsam genutzten physischen Downlink-Kanals, PDSCH, die durch den PDCCH angegeben wird, der Antwortinformationen, die durch die netzwerkseitige Vorrichtung (12) übertragen werden.

8. Verfahren gemäß Anspruch 1, wobei die N ersten Nachrichten mit P unterschiedlichen ersten Synchronisierungssignalblöcken, SSBs, assoziiert sind und jede erste Nachricht mit einem ersten SSB assoziiert ist, wobei P eine ganze Zahl ist; und
das Senden von N Übertragungen der ersten Nachricht an eine netzwerkseitige Vorrichtung (12) Folgendes beinhaltet:
Bestimmen eines ersten Direktzugriffskanalereignisses für jede erste Nachricht unter den N ersten Nachrichten gemäß einer Entsprechung zwischen SSBs und physischen Direktzugriffskanalereignissen und dem ersten SSB, der mit jeder ersten Nachricht assoziiert ist; und
Übertragen der ersten Nachrichten an die netzwerkseitige Vorrichtung (12) gemäß den ersten Direktzugriffskanalereignissen für die ersten Nachrichten.

9. Ein Signalübertragungsverfahren für Direktzugriff, das durch eine netzwerkseitige Vorrichtung (12) durchgeführt wird und Folgendes beinhaltet:
Empfangen (801) von N Übertragungen einer ersten Nachricht, die durch ein Endgerät (11) gesendet werden, wobei die erste Nachricht eine erste Direktzugriffspräambel beinhaltet und N eine ganze Zahl größer als 1 ist; und
Übertragen (802), in einem Antwortfenster, von Antwortinformationen an das Endgerät (11), wobei das Antwortfenster einem Empfangsfenster des Endgeräts (11) entspricht und das Empfangsfenster nach der n-ten Übertragung der ersten Nachricht unter den N Übertragungen der ersten Nachricht gestartet wird, wobei n eine ganze Zahl ist und 1 ≤ n ≤ N;
**dadurch gekennzeichnet, dass**
das Verfahren ferner Folgendes beinhaltet:
Bestimmen einer temporären Funknetzwerkkennung gemäß einer Ziel-Zeit-Frequenz-Ressource, die in einem Protokoll spezifiziert ist oder durch erste Angabeinformationen, die durch die netzwerkseitige Vorrichtung (12) übertragen werden, angegeben wird;
wobei
die Ziel-Zeit-Frequenz-Ressource mindestens eines von Folgendem beinhaltet:
eine Zeit-Frequenz-Ressource einer ersten Nachricht, die unter iⱼ ersten Nachrichten zuerst übertragen wird;
eine Zeit-Frequenz-Ressource einer ersten Nachricht, die unter den iⱼ ersten Nachrichten zuletzt übertragen wird; und
ein Direktzugriffskanalereignis für eine erste Nachricht, das in dem Protokoll spezifiziert ist oder durch die ersten Angabeinformationen unter den iⱼ ersten Nachrichten angegeben wird; wobei
die iⱼ ersten Nachrichten eine erste Nachricht, die in einer nⱼ-ten Übertragung gesendet wird, und iⱼ - 1 erste Nachrichten, die angrenzend an eine Zeit der nⱼ-ten Übertragung der ersten Nachricht übertragen werden, beinhalten, wobei iⱼ eine ganze Zahl ist und 1 ≤ iⱼ ≤ n, 1 ≤ j ≤ N und 1 ≤ nⱼ ≤ N.

10. Verfahren gemäß Anspruch 9, wobei in einem Fall, in dem n gleich N ist und ein Empfangsfenster vorhanden ist, ein Antwortfenster vorhanden ist; oder
in einem Fall, in dem n kleiner als N ist, eine Startzeit des Empfangsfensters einer Zeit eines Start-Orthogonal-Frequency-Division-Multiplex-Symbols, Start-OFDM-Symbols, in einem ersten gemeinsamen Suchraum folgend auf ein Ende der n-ten Übertragung der ersten Nachricht unter den N Übertragungen der ersten Nachricht entspricht und eine Startzeit des Antwortfensters der Startzeit des Empfangsfensters entspricht.

11. Verfahren gemäß Anspruch 9, wobei in einem Fall, in dem n kleiner als N ist, eine Vielzahl von Empfangsfenstern vorhanden ist, wobei ein j-tes Empfangsfenster nach der nⱼ-ten Übertragung der ersten Nachricht unter den N Übertragungen der ersten Nachricht gestartet wird, das j-te Empfangsfenster den iⱼ ersten Nachrichten entspricht, nⱼ eine Summe aus nⱼ₋ᵢ, entsprechend dem (j - 1)-ten Empfangsfenster, und iⱼ ist, n₁ gleich i₁, entsprechend dem 1. Empfangsfenster, ist und die iⱼ ersten Nachrichten eine erste Nachricht, die in der nⱼ-ten Übertragung gesendet wird, und die iⱼ - 1 ersten Nachrichten, die angrenzend an eine Zeit der nⱼ-ten Übertragung der ersten Nachricht gesendet werden, beinhalten, wobei iⱼ eine ganze Zahl ist und 1 ≤ iⱼ ≤ n, 1 ≤ j ≤ N und 1 ≤ nⱼ ≤ N; und
eine Vielzahl von Antwortfenstern vorhanden ist, wobei die Antwortfenster in der gleichen Menge wie die Empfangsfenster vorhanden sind und die Vielzahl von Antwortfenstern in einer Eins-zu-eins-Entsprechung zu der Vielzahl von Empfangsfenstern steht.

12. Verfahren gemäß Anspruch 9, wobei die N ersten Nachrichten mit P unterschiedlichen ersten Synchronisierungssignalblöcken, SSBs, assoziiert sind und jede erste Nachricht mit einem ersten SSB assoziiert ist, wobei P eine ganze Zahl ist; und
das Empfangen von N Übertragungen der ersten Nachricht, die durch ein Endgerät (11) gesendet werden, Folgendes beinhaltet:
Empfangen der N Übertragungen der ersten Nachricht, die durch das Endgerät (11) gesendet werden, wobei die N Übertragungen der ersten Nachricht gemäß erster Direktzugriffskanalereignisse für die N Übertragungen der ersten Nachricht gesendet werden, wobei
das erste Direktzugriffskanalereignis ein erstes Direktzugriffskanalereignis für jede erste Nachricht unter den N ersten Nachrichten ist, wobei das erste Direktzugriffskanalereignis durch das Endgerät (11) gemäß einer Entsprechung zwischen SSBs und physischen Direktzugriffskanalereignissen und dem ersten SSB, der mit jeder ersten Nachricht assoziiert ist, bestimmt wird.

13. Ein Endgerät (1200), beinhaltend einen Prozessor (1210), einen Speicher (1209) und ein Programm oder Anweisungen, das/die in dem Speicher (1209) gespeichert und auf dem Prozessor (1210) ausführbar ist/sind, wobei, wenn das Programm oder die Anweisungen durch den Prozessor (1210) ausgeführt werden, die Schritte des Signalübertragungsverfahrens für Direktzugriff gemäß einem der Ansprüche 1 bis 8 implementiert werden.

14. Eine netzwerkseitige Vorrichtung (1300), beinhaltend einen Prozessor (134), einen Speicher (135) und ein Programm oder Anweisungen, das/die in dem Speicher (135) gespeichert und auf dem Prozessor (134) ausführbar ist/sind, wobei, wenn das Programm oder die Anweisungen durch den Prozessor (134) ausgeführt werden, die Schritte des Signalübertragungsverfahrens für Direktzugriff gemäß einem der Ansprüche 9 bis 12 implementiert werden.

15. Ein lesbares Speichermedium, das ein Programm oder Anweisungen speichert, und wobei, wenn das Programm oder die Anweisungen durch einen Prozessor (1210) ausgeführt werden, die Schritte des Signalübertragungsverfahrens für Direktzugriff gemäß einem der Ansprüche 1 bis 8 implementiert werden, oder, wenn das Programm oder die Anweisungen durch einen Prozessor (134) ausgeführt werden, die Schritte des Signalübertragungsverfahrens für Direktzugriff gemäß einem der Ansprüche 9 bis 12 implementiert werden.

## Revendications

1. Un procédé de transmission de signaux pour un accès aléatoire, effectué par un terminal (11) et comprenant :
l'envoi (201) de N transmissions d'un premier message à un dispositif côté réseau (12), où le premier message comprend un premier préambule d'accès aléatoire et N est un entier relatif supérieur à 1 ; et
la réception (202), dans une fenêtre de réception, d'informations de réponse transmises par le dispositif côté réseau (12), où la fenêtre de réception est démarrée après une n^{ème} transmission d'un premier message parmi les N transmissions d'un premier message, où n est un entier relatif et 1 ≤ n ≤ N ;
**caractérisé en ce que**
le procédé comprend en outre :
la détermination d'un identifiant temporaire de réseau radio selon une ressource temps-fréquence cible spécifiée dans un protocole ou indiquée par des premières informations d'indication transmises par le dispositif côté réseau (12) ; où
la ressource temps-fréquence cible comprend au moins un élément parmi les suivants :
une ressource temps-fréquence d'un premier message transmis en premier parmi iⱼ premiers messages ;
une ressource temps-fréquence d'un premier message transmis en dernier parmi les iⱼ premiers messages ; et
une occasion de canal à accès aléatoire pour un premier message spécifié dans le protocole ou indiqué par les premières informations d'indication parmi les iⱼ premiers messages ; où
les iⱼ premiers messages comprennent un premier message envoyé lors d'une nⱼ^{ème} transmission et iⱼ-1 premiers messages transmis de manière adjacente à un temps de la nⱼ^{ème} transmission d'un premier message, où iⱼ est un entier relatif, et 1 ≤ iⱼ ≤ n, 1 ≤ j ≤ N, et 1 ≤ nⱼ ≤ N.

2. Le procédé selon la revendication 1, où, dans un cas où n est égal à N, une fenêtre de réception est présente ; ou
dans un cas où n est inférieur à N, un temps de démarrage de la fenêtre de réception correspond à un temps d'un symbole de multiplexage par répartition orthogonale de la fréquence, OFDM (*Orthogonal Frequency Division Multiplex*), de démarrage dans un premier espace de recherche de type 1 après une fin de la n^{ème} transmission d'un premier message parmi les N transmissions d'un premier message.

3. Le procédé selon la revendication 1, où, dans un cas où n est inférieur à N, une pluralité de fenêtres de réception sont présentes, où une j^{ème} fenêtre de réception est démarrée après la nⱼ^{ème} transmission d'un premier message parmi les N transmissions d'un premier message, la j^{ème} fenêtre de réception correspond aux iⱼ premiers messages, nⱼ est la somme de nⱼ₋₁ correspondant à une (j-1)^{ème} fenêtre de réception et de iⱼ, n₁ est i₁ correspondant à une 1^{re} fenêtre de réception, et les iⱼ premiers messages comprennent un premier message envoyé lors de la nⱼ^{ème} transmission et les iⱼ-1 premiers messages transmis de manière adjacente à un temps de la nⱼ^{ème} transmission d'un premier message, où iⱼ est un entier relatif, 1 ≤ iⱼ ≤ n, 1 ≤ j ≤ N, et 1 ≤ nⱼ ≤ N.

4. Le procédé selon la revendication 3, comprenant en outre :
dans un cas où les iⱼ premiers messages qui ont été transmis et correspondent à la j^{ème} fenêtre de réception comprennent un premier message dont un premier préambule d'accès aléatoire concorde avec des informations d'indication dans des informations de réponse reçues dans la j^{ème} fenêtre de réception, la détermination qu'une transmission du premier message concordant est réussie.

5. Le procédé selon la revendication 4, où, dans un cas où les iⱼ premiers messages qui ont été transmis et correspondent à la j^{ème} fenêtre de réception comprennent un premier message dont un premier préambule d'accès aléatoire concorde avec des informations d'indication dans des informations de réponse reçues dans la j^{ème} fenêtre de réception, la détermination qu'une transmission du premier message concordant est réussie comprend :
dans un cas où les informations d'indication dans les informations de réponse reçues dans la j^{ème} fenêtre de réception concordent avec un premier préambule d'accès aléatoire dans un message cible parmi les iⱼ premiers messages qui ont été transmis et correspondent à la j^{ème} fenêtre de réception, la détermination qu'une transmission du message cible est réussie, où le message cible est un premier message parmi les iⱼ premiers messages qui correspond à un identifiant temporaire de réseau radio obtenu par le terminal (11).

6. Le procédé selon la revendication 4, après la détermination qu'une transmission du premier message concordant est réussie, le procédé comprenant en outre :
la détermination, selon les informations d'indication dans les informations de réponse ou/et un identifiant temporaire de réseau radio, d'un signal de référence qui satisfait à une relation de quasi co-localisation avec les informations de réponse, où le signal de référence comprend un bloc de signaux de synchronisation, SSB (*Synchronization Signal Block*), ou un signal de référence configuré en réseau.

7. Le procédé selon la revendication 1, où la réception (202), dans une fenêtre de réception, d'informations de réponse transmises par le dispositif côté réseau (12) comprend :
la réception, dans la fenêtre de réception, d'un canal de commande de liaison descendante physique, PDCCH (*Physical Downlink Control CHannel*), brouillé à l'aide de l'identifiant temporaire de réseau radio ; et
la réception, à l'aide d'une ressource de canal partagé de liaison descendante physique, PDSCH (*Physical Downlink Shared CHannel*), indiquée par le PDCCH, des informations de réponse transmises par le dispositif côté réseau (12).

8. Le procédé selon la revendication 1, où les N premiers messages sont associés à P premiers blocs de signaux de synchronisation, SSB, différents et chaque premier message est associé à un premier SSB, où P est un entier relatif ; et
l'envoi de N transmissions d'un premier message à un dispositif côté réseau (12) comprend :
la détermination d'une première occasion de canal à accès aléatoire pour chaque premier message parmi les N premiers messages selon une correspondance entre des SSB et des occasions de canal à accès aléatoire physique et les premiers SSB associés à chaque premier message ; et
la transmission des premiers messages au dispositif côté réseau (12) selon les premières occasions de canal à accès aléatoire pour les premiers messages.

9. Un procédé de transmission de signaux pour un accès aléatoire, effectué par un dispositif côté réseau (12) et comprenant :
la réception (801) de N transmissions d'un premier message envoyées par un terminal (11), où le premier message comprend un premier préambule d'accès aléatoire et N est un entier relatif supérieur à 1 ; et
la transmission (802), dans une fenêtre de réponse, d'informations de réponse au terminal (11), où la fenêtre de réponse correspond à une fenêtre de réception du terminal (11), et la fenêtre de réception est démarrée après la n^{ème} transmission d'un premier message parmi les N transmissions d'un premier message, où n est un entier relatif et 1 ≤ n ≤ N ;
**caractérisé en ce que**
le procédé comprend en outre :
la détermination d'un identifiant temporaire de réseau radio selon une ressource temps-fréquence cible spécifiée dans un protocole ou indiquée par des premières informations d'indication transmises par le dispositif côté réseau (12) ; où
la ressource temps-fréquence cible comprend au moins un élément parmi les suivants :
une ressource temps-fréquence d'un premier message transmis en premier parmi iⱼ premiers messages ;
une ressource temps-fréquence d'un premier message transmis en dernier parmi les iⱼ premiers messages ; et
une occasion de canal à accès aléatoire pour un premier message spécifié dans le protocole ou indiqué par les premières informations d'indication parmi les iⱼ premiers messages ; où
les iⱼ premiers messages comprennent un premier message envoyé lors d'une nⱼ^{ème} transmission et iⱼ-1 premiers messages transmis de manière adjacente à un temps de la nⱼ^{ème} transmission d'un premier message, où iⱼ est un entier relatif, et 1 ≤ iⱼ ≤ n, 1 ≤ j ≤ N, et 1 ≤ nⱼ ≤ N.

10. Le procédé selon la revendication 9, où, dans un cas où n est égal à N et une fenêtre de réception est présente, une fenêtre de réponse est présente ; ou
dans un cas où n est inférieur à N, un temps de démarrage de la fenêtre de réception correspond à un temps d'un symbole de multiplexage par répartition orthogonale de la fréquence, OFDM, de démarrage dans un premier espace de recherche commun après une fin de la n^{ème} transmission d'un premier message parmi les N transmissions d'un premier message, et un temps de démarrage de la fenêtre de réponse correspond au temps de démarrage de la fenêtre de réception.

11. Le procédé selon la revendication 9, où, dans un cas où n est inférieur à N, une pluralité de fenêtres de réception sont présentes, où une j^{ème} fenêtre de réception est démarrée après la nⱼ^{ème} transmission d'un premier message parmi les N transmissions d'un premier message, la j^{ème} fenêtre de réception correspond aux iⱼ premiers messages, nⱼ est la somme de nⱼ₋₁ correspondant à une (j-1)^{ème} fenêtre de réception et de iⱼ, n₁ est i₁ correspondant à une 1^{re} fenêtre de réception, et les iⱼ premiers messages comprennent un premier message envoyé lors de la nⱼ^{ème} transmission et les iⱼ-1 premiers messages transmis de manière adjacente à un temps de la nⱼ^{ème} transmission d'un premier message, où iⱼ est un entier relatif, et 1 ≤ iⱼ ≤ n, 1 ≤ j ≤ N, et 1 ≤ nⱼ ≤ N ; et
une pluralité de fenêtres de réponse sont présentes, les fenêtres de réponse sont aussi nombreuses que les fenêtres de réception, et la pluralité de fenêtres de réponse sont en correspondance bijective avec la pluralité de fenêtres de réception.

12. Le procédé selon la revendication 9, où les N premiers messages sont associés à P premiers blocs de signaux de synchronisation, SSB, différents et chaque premier message est associé à un premier SSB, où P est un entier relatif ; et
la réception de N transmissions d'un premier message envoyées par un terminal (11) comprend :
la réception des N transmissions d'un premier message envoyées par le terminal (11), où les N transmissions d'un premier message sont envoyées selon des premières occasions de canal à accès aléatoire pour les N transmissions d'un premier message, où
la première occasion de canal à accès aléatoire est une première occasion de canal à accès aléatoire pour chaque premier message parmi les N premiers messages, où la première occasion de canal à accès aléatoire est déterminée par le terminal (11) selon une correspondance entre des SSB et des occasions de canal à accès aléatoire physique et le premier SSB associé à chaque premier message.

13. Un terminal (1200), comprenant un processeur (1210), une mémoire (1209), et un programme ou des instructions stockés dans la mémoire (1209) et exécutables sur le processeur (1210), où, lorsque le programme ou les instructions sont exécutés par le processeur (1210), les étapes du procédé de transmission de signaux pour un accès aléatoire selon n'importe laquelle des revendications 1 à 8 sont mises en œuvre.

14. Un dispositif côté réseau (1300), comprenant un processeur (134), une mémoire (135), et un programme ou des instructions stockés dans la mémoire (135) et exécutables sur le processeur (134), où, lorsque le programme ou les instructions sont exécutés par le processeur (134), les étapes du procédé de transmission de signaux pour un accès aléatoire selon n'importe laquelle des revendications 9 à 12 sont mises en œuvre.

15. Un support de stockage lisible, stockant un programme ou des instructions, et, lorsque le programme ou les instructions sont exécutés par un processeur (1210), les étapes du procédé de transmission de signaux pour un accès aléatoire selon n'importe laquelle des revendications 1 à 8 sont mises en œuvre, ou, lorsque le programme ou les instructions sont exécutés par un processeur (134), les étapes du procédé de transmission de signaux pour un accès aléatoire selon n'importe laquelle des revendications 9 à 12 sont mises en œuvre.
